(19) Europäisches Patentamt
European Patent Office
Office européen des brevets

(11) Publication number: 0 032 378
B1

(12) **EUROPEAN PATENT SPECIFICATION**

(45) Date of publication of patent specification: **12.09.84**

(51) Int. Cl.$^3$: **G 05 G 9/02**, E 05 B 53/00, E 05 B 65/19

(21) Application number: **81100054.6**

(22) Date of filing: **07.01.81**

(54) **Mechanical remote control arrangement.**

(30) Priority: **10.01.80 JP 1621/80**

(43) Date of publication of application:
**22.07.81 Bulletin 81/29**

(45) Publication of the grant of the patent:
**12.09.84 Bulletin 84/37**

(84) Designated Contracting States:
**DE FR GB IT**

(56) References cited:
**GB-A-2 039 319**

(73) Proprietor: **NISSAN MOTOR COMPANY, LIMITED**
**No.2, Takara-cho, Kanagawa-ku**
**Yokohama-shi Kanagawa-ken 221 (JP)**

(72) Inventor: **Mochida, Haruo**
**No. 2-23-2-41, Serigaya Konan-ku**
**Yokohama City (JP)**

(74) Representative: **Patentanwälte Dipl.-Ing. A. Grünecker, Dr.-Ing. H. Kinkeldey, Dr.-Ing. W. Stockmair,**
**Dr. rer. nat. K. Schumann, Dipl.-Ing. P.H. Jakob,**
**Dr. rer. nat. G. Bezold Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 032 378 B1

## Description

The invention relates to a mechanical remote control arrangement to produce transmission force of push-pull cable comprising:

a first latch mechanism having a stationary member and a first lever pivotally thereto for operating said first latch mechanism, a second latch mechanism having a stationary member and a second lever pivotally mounted thereon for opererating said second latch mechanism, a first Bowden cable which operatively interconnects said first and second latch mechanisms, said Bowden cable having an inner wire and an outer housing, said inner wire being connected to said first lever, a second Bowden cable having an outer housing and an inner wire, said second Bowden cable operatively interconnecting said second latch mechanism and manually operable means for moving the inner wire of said second Bowden cable in a first axial direction to release said first latch mechanism and in a second axial direction to release said second latch mechanism.

A mechanical remote control arrangement to produce transmission force of push-pull cable allows generally to control locks for opening the vehicular trunk lids, fuel filler covers and the like.

In a known mechanical remote control arrangement as described and shown in the GB—A—2 039 319 one single lever is provided for movement in different directions whereby either one of two latching means or locks may be operated selectively. However, the second latching means shows a very complicated and complex structure, resulting in raised manufacturing and assembling costs.

The invention as claimed in Claim 1 is intended to remedy these drawbacks. It solves the problem of how to provide a mechanical remote control arrangement having a simple construction.

By actuating the manually operable means for movement in a first direction the inner wire of the Bowden cable is pulled and this force is transmitted to the first latching means. Since only one inner cable is provided it is only necessary to secure one end of the inner cable to the first latching means and the other end to the manually operable means. The stopper provided on the inner wire allows for abutment against a stationary member of the second latch mechanism upon the lever being moved in such a position in which the inner wire is pushed in the direction towards the second latch means. The abutment of the stopper causes the outer housing of the Bowden cable surrounding the inner wire extending between the manually operable means and the second latch means to flex and to move thereby the lever of the second latch mechanism, which lever is attached to the end of the outer housing adjacent the stopper.

Further particular advantageous developments are claimed by the sub-claims.

A way of carrying out the invention is described in detail below with reference to drawings illustrating one specific embodiment, in which:

Fig. 1 schematically shows an embodiment of the invention;

Fig. 2 is an enlarged sectional view of a part of the arrangement shown in Fig. 1; and

Fig. 3 is a sectional view of a lever arrangement for manual operation which may be used in place of that shown in Fig. 1.

Referring now to the drawings and more specifically to Fig. 1, a first embodiment of the invention is shown. In Fig. 1 the numeral 10 denotes a manually operable means having a single lever 13, while 11 and 12 denote first and second latch mechanisms, respectively. The lever 13 of the manually operable means 10 is operatively connected to an inner wire 14 of a Bowden cable 16 interconnecting the means 10 and the first and second latch mechanisms 11 and 12 and is biased by a spring 15 toward a neutral position N. As shown in Fig. 1 the inner wire 14 extends continuously from the manually operable means 10 to a detent lever 18 of the first latch mechanism 11. This lever is pivotally mounted on a base plate 20 which in turn is fixed to the chassis or the like of a vehicle (by way of example). A spring 22 interconnects the detent lever 18 with the base plate 20 in a manner to cause the detent lever 18 to rotate in a direction to engage a locking bar 24 fixedly secured to a first lid 26 which closes a storage compartment or the like (not shown). The inner wire 14 is formed with a bead 28 at the end which seats in a suitable aperture 30 formed in the detent lever 18. With this arrangement upon closure of the lid 26 the detent lever 18 will be slightly rotated in the clockwise direction (as seen in the Fig. 1). However, this will not influence the inner wire 14 due to the effective lost motion connection established between the inner wire 14 and the detent lever 18 through the bead 28 and aperture 30.

When the lever 13 is rotated in the direction indicated by arrow A, the inner wire 14 will be pulled in the direction of the manually operable means 10 and accordingly cause the detent lever 18 to rotate in the clockwise direction to release the connection between said detent lever 18 and the locking bar 24, thus unlocking the lid 26.

Fig. 2 shows in detail part of the second latch mechanism 12. In this mechanism 12 the numeral 32 denotes a base plate which is fixed to the chassis of the vehicle or the like, and on which a lever 34 is pivotally mounted. One end of the lever 34 is operatively connected to one end of the outer housing 36 which surrounds that part of the inner wire 14 extending between the manually operable means 10 and the second latch mechanism 12 through a reinforcement end member 38. The other end of the lever 34 is provided with a slot 40 which slidably receives the end of the link 42 which extends between the lever 34 and a detent pin 44 (see Fig. 1). The pin 44 is biased by a spring 46 to extend and engage a flange member 48 of a second lid 50 of the vehicle. It will also be understood that the slot 40 cooperating with the link 42 defines a lost motion connection which allows the second lid 50 to be closed and displace the detent pin 44 against the bias of the spring 46 without influencing the lever 34 or the outer housing 36.

Fig. 2 shows in section a tubular member 52 formed with a stepped bore 54. The member 52 is fixedly connected to the base plate 32 and serves to mount one end of a second outer housing 56 which extends between the first and second latch mechanisms 11 and 12. The other end of the second outer housing 56 is fixedly connected to the base plate 20 of the first latch mechanism (see Fig. 1).

A stopper 58 is fixed onto the inner wire 14 by welding, brazing, soldering or the like. The stopper is dimensioned to be slidable within the larger portion of the stepped bore 54 and to abut a shoulder 60 defined in the stepped bore. Thus, when the lever 13 is moved in the direction indicated by arrow B (see Fig. 1), the stopper is moved into abutment with the shoulder so that further travel of the inner wire 14 away from the actuating mechanism 10 is limited. Further movement of the lever 13 in the B direction induces a reaction which causes the portion of the inner wire between the manually operable means 10 and the second latch mechanism 12, and subsequently the outer housing 36 surrounding said portion of the wire to flex. The flexure of the outer housing allows the inner wire to be inserted further into the outer housing by the movement of the lever 13 so that the distance between the stopper 58 and the reinforcing end member 38 fixed to the end of the housing 36, increases with the result that the lever 34 is pulled by the outer housing 36 and rotates in the anti-clockwise direction, retracting the detent pin 44 from its securing position via the linkage connection therebetween, which unlocks the lid 50.

If required, a bracket or brackets 61 may be used to slidably support the outer housing 36 and/or 56 at locations intermediate of the manually operable means 10 and first and second latch mechanisms 11 and 12.

Thus in summary, the stopper 58 allows the movement of the inner wire 14 in a direction which allows the release of the first latch mechanism but resists movement in the opposite direction to induce a reaction which causes it and the outer housing member surrounding same to flex and accordingly induce the outer housing to pull a lever of the second latch mechanism to release same. In other words, when the lever is urged in direction A, the wire is pulled with respect to the outer housing (which remains axially stationary) to operate the first latch mechanism 11 in the conventional manner. When the lever is urged in direction B, the roles of the wire and outer housing are reversed, and the outer housing is pulled with respect to the cable (which is held axially stationary by the stopper 58 engaging the shoulder 60) to operate the second latch mechanism 12, independently of the first latch mechanism. This unique arrangement allows two latch mechanisms to be individually or selectively released by the movement of a lever of an actuating mechanism in first or second directions.

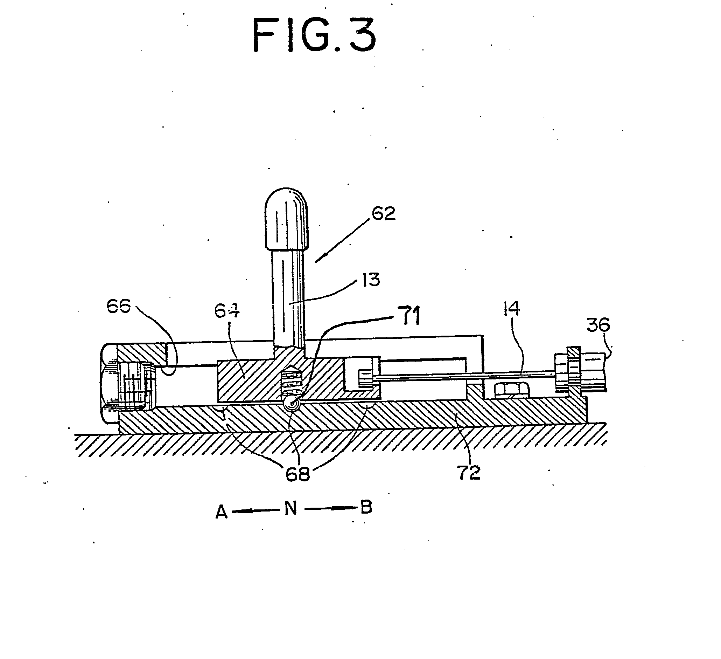

Fig. 3 shows a second embodiment of a manually operable means 62 which can be used with the Bowden cable arrangement 16 of the present invention. In this arrangement, the lever 13 is formed with a slidable member 64 which slides in a bore or the like 66. The bore 66 is formed with indents 68 in which a spring loaded detent ball 71 carried in the slidable member is seatable. The slidable member 64 is further formed with a slot for receiving a bead carried on the end of the inner wire 14. As shown, the inner wire 14 extends from the slidable member into the outer housing 36, which is fixed securely to the base member 72 in which the bore 66 is formed. The bore is slotted to allow the lever 13 to be slid back and forth from the neutral position N in the directions A and B for operating the first and second latch mechanisms. The indents 68 are each formed to correspond to the neutral position, first latch mechanism release position and the second latch mechanism release position. This arrangement of course features simple construction and assembly.

## Claims

1. A mechanical remote control arrangement to produce transmission force of push-pull cable comprising:

a first latch mechanism (11) having a stationary member (20) and a first lever (18) pivotally thereto for operating said first latch mechanism, a second latch mechanism (20) having a stationary member (32) and a second lever (34) pivotally mounted thereon for operating said second latch mechanism, a first Bowden cable which operatively interconnects said first and second latch mechanisms, said Bowden cable having an inner wire and an outer housing (56), said inner wire being connected to said first lever, a second Bowden cable having an outer housing (36) and an inner wire, said second Bowden cable operatively interconnecting said second latch mechanism and manually operable means (10) for moving the inner wire of said second Bowden cable in a first axial direction to release said first latch mechanism and in a second axial direction to release said second latch mechanism, characterised in that said inner wires of said first and second Bowden cables being defined by a single wire (14), said outer housing (36) of said second Bowden cable being connected to said second lever (34), and a stopper (58) being formed on said single inner wire (14) and adapted to abut against a stationary member (60) of said second latch mechanism (12) when said manually operable means (10; 62) moves said single inner wire (14) in said second axial direction.

2. The mechanical remote control arrangement comprising a resilient means (22) to bias the first lever (18) in a latching position of the first latch mechanism (11) according to claim 1, characterised in that said single inner wire (14) extends through an aperture (30) in said first lever (18) and is connected thereto by a bead (28) formed at the end of said single inner wire (14) and seated against said aperture (30), said aperture (30) having a cross-section sufficiently large for allowing free movement of said first lever (18) relative to said single inner wire (14).

3. The mechanical remote control arrangement according to claim 1, characterised in that said stationary member (32) comprises a stepped bore (54) through which said single inner wire (14) is extending, said stepped bore (54) defining a shoulder (60) against which said stopper (58) abuts when said single inner wire (14) is moved in said second axial direction.

4. The mechanical remote control arrangement according to claim 1, characterised in that said manually operable means (62) comprises a base member (72) formed with a stepped bore (66), a slidable member (64) disposed in said bore (66), said slidable member (64) being fixedly secured to a handle (13) for movement therewith and operatively connected with said single inner wire (14), said slidable member (64) having a spring loaded ball (70) engageable with indents (68) formed in said stepped bore (66) for holding said slidable member (64) in one of a neutral (N), a first (A) and a second (B) axial positions.

**Patentansprüche**

1. Mechanische Fernbedienungseinrichtung zum Erzeugen einer Übertragungskraft bei einem Druck-Zug-Kabel, umfassend einen ersten Verriegelungsmechanismus (11), der ein ortsfestes Teil (20) und einen an diesem verschwenkbaren, ersten Hebel (18) zum Betrieb des ersten Verriegelungsmechanismus aufweist, einen zweiten Verriegelungsmechanismus (20), der ein ortsfestes Teil (32) und einen verschwenkbar an diesem befestigten, zweiten Hebel (34) zum Betrieb des zweiten Verriegelungsmechanismus aufweist, einen ersten Bowden-Zug, der betriebsmäßig den ersten und den zweiten Verriegelungsmechanismus miteinander verbindet, wobei der Bowden-Zug eine Seele, die mit dem ersten Hebel verbunden ist, und eine Außenhülle (56) aufweist, einen zweiten Bowden-Zug mit einer Außenhülle (36) und einer Seele, wobei der zweite Bowden-Zug betriebsmäßig den zweiten Verriegelungsmechanismus und eine Handbetätigungseinrichtung (10) zur Bewegung der Seele des zweiten Bowden-Zugs in einer ersten, axialen Richtung zur Freigabe des ersten Verriegelungsmechanismus und in einer zweiten axialen Richtung zur Freigabe des zweiten Verriegelungsmechanismus verbindet, dadurch gekennzeichnet, daß die Seelen des ersten und zweiten Bowden-Zugs von einer einzigen Seele (14) gebildet sind, daß die Außenhülle (36) des zweiten Bowden-Zugs mit dem zweiten Hebel (34) verbunden ist und daß ein Anschlagteil (58) an der einzigen Seele (14) gebildet ist und gegen ein ortsfestes Teil (60) des zweiten Verriegelungsmechanismus (12) stoßbar ist, wenn die Handbetätigungseinrichtung (10; 62) die einzige Seele (14) in die zweite axiale Richtung bewegt.

2. Mechanische Fernbedienungseinrichtung mit einer elastischen Einrichtung (22), um den ersten Hebel (18) in eine Verriegelungsstellung des ersten Verriegelungsmechanismus (11) vorzuspannen, nach Anspruch 1, dadurch gekennzeichnet, daß sich die einzige Seele (14) durch eine Öffnung (30) in dem ersten Hebel (18) erstreckt und mit diesem durch einen Nippel (28) verbunden ist, der an dem Ende der einzigen Seele (14) ausgebildet ist und gegen die Öffnung (30) sitzt, wobei die Offnung (30) einen ausreichend großen Querschnitt aufweist, um eine freie Bewegung des ersten Hebels (18) relativ zu der einzigen Seele (14) zu ermöglichen.

3. Mechanische Fernbedienungseinrichtung nach Anspruch 1, dadurch gekennzeichnet, daß das ortsfeste Teil (32) eine abgestufte Bohrung (54) umfaßt, durch die sich die einzige Seele (14) erstreckt, und daß die abgestufte Bohrung (54) eine Schulter (60) begrenzt, gegen die das Anschlagsteil (58) anliegt, wenn die einzige Seele (14) in der zweiten axialen Richtung bewegt wird.

4. Mechanische Fernbedienungseinrichtung nach Anspruch 1, dadurch gekennzeichnet, daß die Handbetätigungseinrichtung (62) ein mit einer abgestuften Bohrung (66) ausgebildetes Grundteil (72) und ein in der Bohrung (66) angeordnetes Schiebeteil (64) umfaßt, daß das Schiebeteil (64) fest an einem Handgriff (13) zur Bewegung mit diesem befestigt und betriebsmäßig mit der einzigen Seele (14) verbunden ist und daß das Schiebeteil (64) eine federbelastete Kugel (70) aufweist, die mit Einschnitten (68) in Eingriff bringbar ist, welche in der abgestuften Bohrung (66) ausgebildet sind, um das Schiebeteil (64) in einer neutralen (N), einer ersten (A) bzw. einer zweiten (B) axialen Stellung zu halten.

**Revendications**

1. Dispositif mécanique de commande à distance pour produire une force de transmission d'un câble à va-et-vient comprenant:

un premier mécanisme de blocage (11) ayant un organe stationnaire (20) et un premier levier (18) qui y pivote pour manoeuvrer ledit premier mécanisme de blocage, un second mécanisme de blocage (20) ayant un organe stationnaire (32) et un second levier (34) qui y est monté pivotant pour manoeuvrer ledit second mécanisme de blocage, un premier câble de Bowden qui relie activement lesdits premier et second mécanismes de blocage, ledit câble de Bowden ayant un câble interne et une gaine externe (56), ledit câble interne étant connecté audit premier levier, un second câble de Bowden ayant une gaine externe (36) et un câble interne, ledit second câble de Bowden reliant activement ledit second mécanisme de blocage et un moyen à commande manuelle (10) pour déplacer le câble interne dudit second câble de Bowden dans une première direction axiale pour libérer ledit premier mécanisme de blocage et dans une seconde direction axiale pour libérer ledit second mécanisme de blocage, caractérisé en ce que lesdits câbles internes desdits premier et second câbles de Bowden sont définis par un seul câble (14), ladite gaine externe (36) dudit second câble de Bowden étant connectée audit second levier (34), et une butée (58) étant formée sur ledit seul câble interne (14) et adaptée à venir en aboutement contre un organe stationnaire (60) dudit second mécanisme de blocage (12) quand ledit moyen à commande manuelle (10; 62) déplace ledit seul câble interne (14) dans ladite seconde direction axiale.

2. Dispositif mécanique de commande à distance comprenant un moyen élastique (22) pour solliciter le premier levier (18) dans une position de blocage du premier mécanisme de blocage (11) selon la revendication 1, caractérisé en ce que ledit seul câble interne (14) traverse une ouverture (30) dans ledit premier levier (18) pour lui être connecté par un bourrelet (28) formé à l'extrémité dudit seul câble interne (14) et reposer contre ladite ouverture (30), ladite ouverture (30) ayant une section transversale suffisamment importante pour permettre un libre mouvement du premier levier (18) par rapport audit seul câble interne (14).

3. Dispositif mécanique de commande à distance selon la revendication 1, caractérisé en ce que ledit organe stationnaire (32) comprend un perçage échelonné (54) à travers lequel s'étend ledit seul câble interne (14), ledit perçage échelonné (54) définissant un épaulement (60) contre lequel ladite butée (58) est en aboutement quand ledit seul câble interne (14) est déplacé dans sa seconde direction axiale.

4. Dispositif mécanique de commande à distance selon la revendication 1, caractérisé en ce que le moyen à commande manuelle (62) comprend un organe de base (72) ayant un perçage échelonné (66), un organe coulissant (64) disposé dans ledit perçage (66), ledit organe coulissant (64) étant fixé solidement à une poignée (13) pour un mouvement avec elle et étant activement relié audit seul câble interne (14), ledit organe coulissant (64) ayant une bille chargée par ressort (70) pouvant venir en engagement avec des crans d'arrêt (68) formés dans ledit perçage échelonné (66) pour maintenir ledit organe coulissant (64) à une position parmi neutre (N), première (A) et seconde (B) positions axiales.

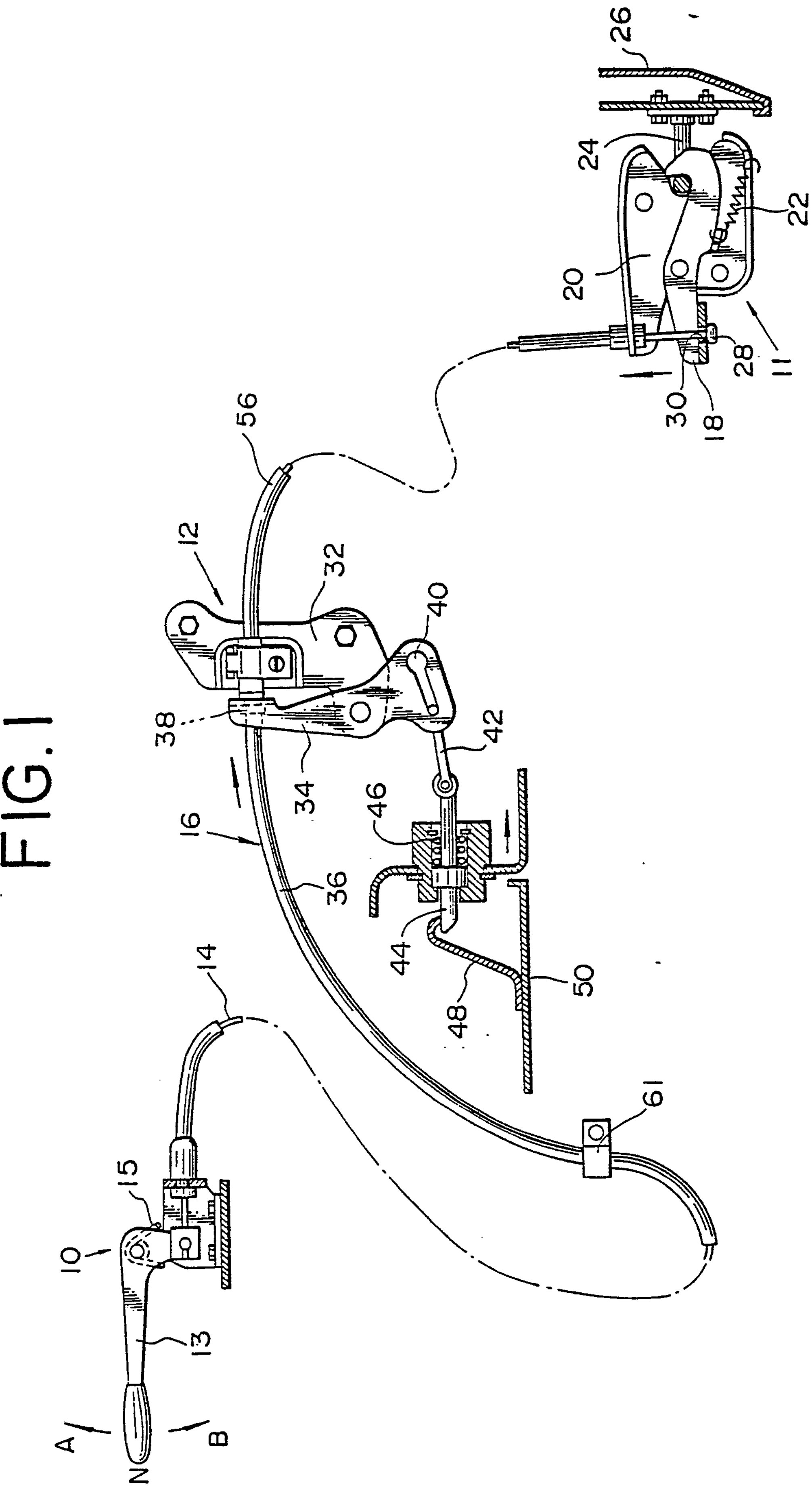

10
11
12
13
14
15
16
18
20
22
24
26
28
30
32
34
36
38
40
42
44
46
48
50
56
61
A
B
N


FIG. 1

FIG. 2

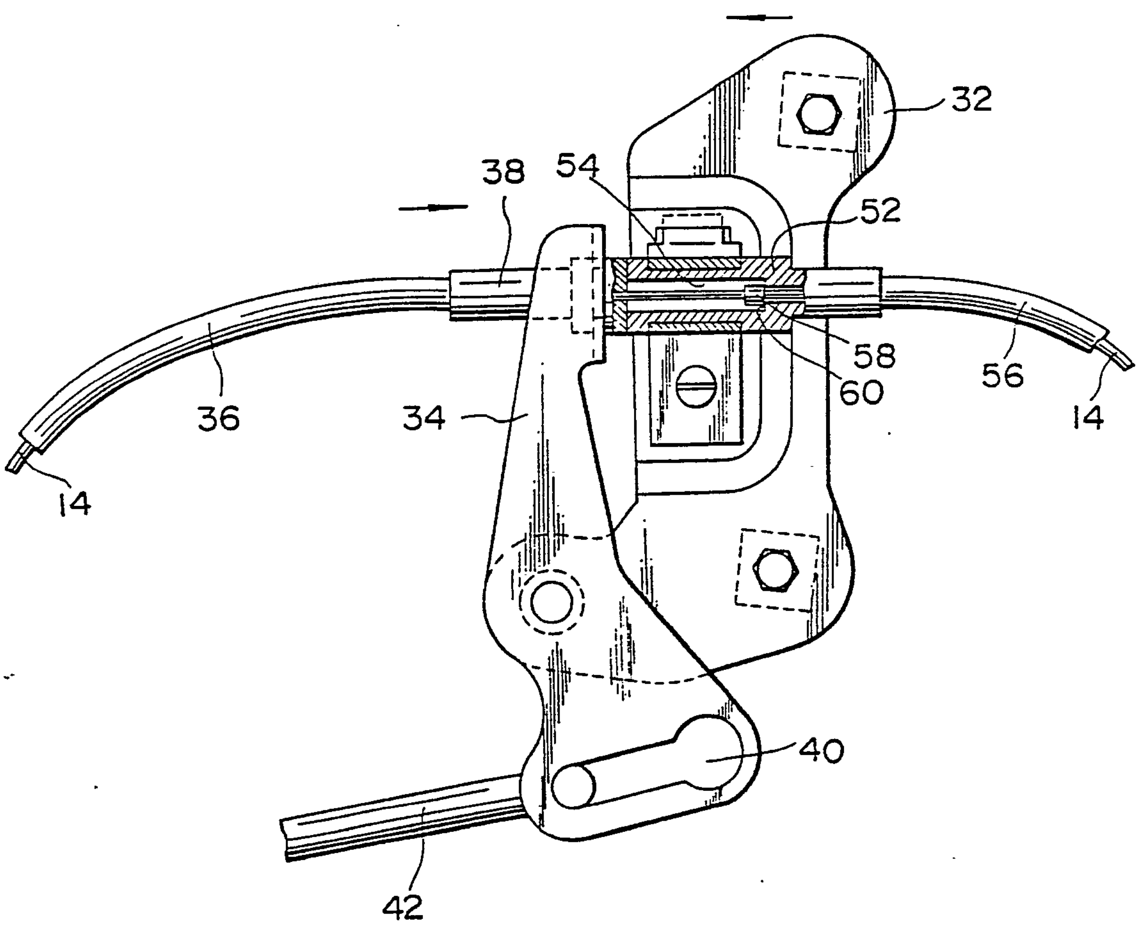

FIG. 3